# EUROPÄISCHE PATENTSCHRIFT

(11) **EP 3 317 505 B1**
(45) Veröffentlichungstag und Bekanntmachung des Hinweises auf die Patenterteilung: **09.06.2021**
(21) Anmeldenummer: 16740947.3
(22) Anmeldetag: 28.06.2016
(51) Int. Cl.: F02D 41/00, F02D 13/02

(54) **BRENNKRAFTMASCHINE MIT EINER REGELEINRICHTUNG**
INTERNAL COMBUSTION ENGINE COMPRISING A CONTROL DEVICE
MOTEUR À COMBUSTION INTERNE MUNI D'UN DISPOSITIF DE RÉGULATION

(30) Priorität: 30.06.2015 AT 4172015
(43) Veröffentlichungstag der Anmeldung: 09.05.2018
(73) Patentinhaber: Innio Jenbacher GmbH & Co OG, 6200 Jenbach (AT)
(72) Erfinder: THALHAUSER, Josef, 83191 Nußdorf (DE); SPYRA, Nikolaus, 6020 Innsbruck (AT); MUSU, Ettore, 41051 Modena (IT)
(74) Vertreter: Torggler & Hofinger Patentanwälte
(86) Internationale Anmeldenummer: PCT/AT2016/050236
(87) Internationale Veröffentlichungsnummer: WO 2017/000012

(56) Entgegenhaltungen:
- DE-C1- 19 646 651
- JP-A- H09 250 352
- JP-A- 2003 041 960
- JP-A- 2014 098 322
- US-A1- 2009 018 751

## Beschreibung

Die vorliegende Erfindung betrifft eine Brennkraftmaschine mit den Merkmalen des Oberbegriffs des Anspruchs 1.

Eine derartige Brennkraftmaschine geht aus der EP 0 259 382 B1 hervor.

Bei der aus der EP 0 259 382 B1 bekannten Regelstrategie wird in Abhängigkeit einer gemessenen Ist-Leistung der Brennkraftmaschine ein Ladedrucksollwert erzeugt. Durch einen ersten Regelkreis (Ladedruckregler) wird über einen Soll-Ist-Wert-Vergleich der Istladedruck dem Ladedrucksollwert nachgeregelt. Bei diesem Ladedrucksollwert liegt ein bestimmter Zielwert der NOx-Emission vor. Da die NOx-Emission nicht direkt bekannt ist, wird der Ladedruck als Hilfsregelgröße verwendet. Der funktionale Zusammenhang liegt in Form einer Kurvenschar vor, wobei jede Kurve für einen bestimmten NOx-Wert den Zusammenhang zwischen Ist-Leistung und Ladedrucksollwert angibt. Insofern ist also der Ladedruckregler eigentlich ein Emissionsregelkreis in Bezug auf die NOx-Emission (NOx-Emissionsregelkreis).

Die Einstellung des Lambda-Wertes erfolgt über Beeinflussung einer Gasdosiereinrichtung. Die Veränderung des Lambda-Wertes würde an sich eine Veränderung der Leistung der Brennkraftmaschine bewirken, was durch einen zweiten Regelkreis (Leistungsregelkreis) ausgeglichen werden muss. Dieser Ausgleich im Leistungsregelkreis erfolgt über jene Aktuatoren, die den Ladedruck unmittelbar beeinflussen (Drosselklappe und Verdichterumblasung). Der Ladedruck wird also indirekt über den Lambda-Wert geregelt. Diese Regelstrategie ist als LEANOX®-Regelung bekannt.

Es wird demgemäß also der funktionale Zusammenhang zwischen dem vor den Einlassventilen des Motors herrschenden, relativ leicht messbaren Ladedruck und der Leistung genutzt, um die NOx-Emissionen zu kontrollieren.

Dazu ist der Ausgang der Ladedruckmessung mit einem Istwert-Eingang des ersten Regelkreises verbunden. Im ersten Regelkreis der EP 0 259 382 B1 (Ladedruckregler) ist eine programmierbare Einrichtung zur Ermittlung eines leistungsabhängigen Sollwertes für den Ladedruck aus dem von der Leistungsmesseinrichtung zugeführten Leistungsmesssignal angeordnet.

Dabei erfolgt die Regelung des Ladedrucks indirekt über die Regelung des Verbrennungs-Luftverhältnisses (Lambda) im Luft-Gas-Mischer, wobei beispielsweise ein Abmagern des Gemisches (Erhöhen von Lambda) eine Erhöhung des Ladedrucks vor den Einlassventilen bewirkt (bei der Forderung einer konstanten Motorleistung). Obiges beschreibt die kaskadierte Form der LEANOX®-Regelung. Es besteht auch die Möglichkeit, beide Regeleingriffe gleichzeitig durchzuführen (siehe dazu die unveröffentlichte österreichische Patentanmeldung A 575/2014). Die Erfindung ist bei beiden Formen der LEANOX®-Regelung einsetzbar.

Eine Alternative besteht darin, statt des Ladedrucks den Zylinderdruck als Regelgröße zu verwenden. Dies ist beispielsweise in der unveröffentlichten österreichischen Patentanmeldung A 120/2014 beschrieben. Die Erfindung ist auch bei einer solchen Regelung einsetzbar.

JP H09 250352 A und JP 2014 098322 A sind weitere Beispiele für Regelverfahren zur Einstellung des Ladedrucks.

Grundsätzlich sind bzgl. der Art der Treibstoffeinbringung in die Kolben-ZylinderEinheiten zwei Typen von Brennkraftmaschinen bekannt.

Der erste Typ sind luftaufgeladene Brennkraftmaschinen mit zylinderindividueller Treibstoffzuführung (z. B. unter Verwendung von Port-Injection-Ventilen). Der zweite Typ sind gemischaufgeladene Brennkraftmaschinen. Die Erfindung ist bei beiden Typen von Brennkraftmaschinen einsetzbar.

Ferner ist ein variabler Ventiltrieb bekannt, der eine variable Betätigungscharakteristik der Einlassventile gestattet.

Ferner ist es bekannt, die Einlassventile einer Brennkraftmaschine zu schließen, bevor der Kolben im Ansaugtakt seinen unteren Totpunkt erreicht hat (frühes Miller-Verfahren). In einem alternativen Verfahren werden Einlassventile im Verdichtungstakt nach dem Erreichen der maximalen Füllung im Zylinder geschlossen (spätes Miller-Verfahren).

Ein frühes Miller-Verfahren mit einer veränderten Betätigungscharakteristik der Einlassventile in die Richtung eines verringerten Füllgrades bewirkt:
- um eine konstante Leistung zu erbringen, muss die in den Brennraum eingebrachte Energie annähernd konstant gehalten werden, weswegen der Ladedruck steigen muss
- durch die Expansion bzw. die verringerte effektive Verdichtung sinkt die Temperatur der Zylinderladung zum Zündzeitpunkt und daraus ergeben sich geringere NOx-Emissionen

Das Miller-Verfahren kann beispielsweise über einen variablen Ventiltrieb erfolgen.

Wird zur Erhöhung des Wirkungsgrads bzw. zur Leistungsregelung ein variabler Ventiltrieb verwendet und auf die Betätigungscharakteristik der Einlassventile eingegriffen und damit Liefergrad und der Miller-Effekt verändert, stimmt aber der eingangs erklärte Zusammenhang zwischen Ladedruck, Leistung und Emissionen nicht mehr.

Problematisch ist, dass die aus dem Stand der Technik bekannten Regelverfahren zur Emissionsregelung die Beeinflussung des Miller-Verfahrens durch geänderte Betätigungscharakteristik der Einlassventile eines variablen Ventiltriebs nicht berücksichtigen, wodurch sich ein ungünstiges Emissionsverhalten ergibt.

Aufgabe der Erfindung ist die Bereitstellung einer Brennkraftmaschine mit einer gegenüber dem Stand der Technik verbesserten Regeleinrichtung.

Diese Aufgabe wird durch eine Brennkraftmaschine mit einer Regeleinrichtung nach Anspruch 1 gelöst. Vorteilhafte Ausführungsformen sind in den abhängigen Ansprüchen definiert.

Indem also der funktionale Zusammenhang den Einfluss einer Verstellung der Betätigungscharakteristik des wenigstens einen Einlassventiles berücksichtigt, kann bei der Regelung der Brennkraftmaschine der hinsichtlich Emissionen und Wirkungsgrad günstigste Regeleingriff vorgenommen werden.

Eine Verstellung der Betätigungscharakteristik des wenigstens einen Einlassventiles erfolgt zum Beispiel durch einen variablen Ventiltrieb (WT).
Ein variabler Ventiltrieb wird häufig deswegen eingesetzt, weil damit eine Brennkraftmaschine bei unterschiedlichen Betriebspunkten mit dem günstigsten Wirkungsgrad betrieben werden kann. Auch ist es bekannt, einen variablen Ventiltrieb zur Leistungsregelung einzusetzen, etwa um einen drosselklappenfreien Betrieb zu realisieren.

Eine Änderung der Betätigungscharakteristik eines Einlassventiles bewirkt eine Veränderung des Liefergrades (Füllgrad) und damit des Massendurchsatzes der Brennkraftmaschine.

Ein Leistungsregelkreis ist dazu ausgebildet, eine Ist-Leistung der Brennkraftmaschine an eine Soll-Leistung der Brennkraftmaschine anzugleichen.

Unter der Annahme konstanter Leistung und konstanter NOx-Emissionen muss bei einer Betätigungscharakteristik mit geringerem Füllgrad der Ladedruck angehoben werden, aber nicht so weit, dass sich das gleiche Treibstoff-Luft-verhältnis einstellt, da eine stärkere Kühlung der Zylinderladung gegeben ist.

### Ein Beispiel:

Wird von einer ersten Steuerzeit auf eine Steuerzeit mit "schärferen" Einlassventil-Schließzeiten übergegangen, sinkt zunächst die mechanische bzw. elektrische Leistung der Brennkraftmaschine. Unter "schärferen" Einlassventil-Schließzeiten sei jene Veränderung von Einlassventil-Schließzeiten im Miller-Verfahren verstanden, die einen geringeren Füllgrad der Brennkraftmaschine bewirkt. Dies kann je nach aktueller Drehzahl der Brennkraftmaschine und aktuellem Schließzeitpunkt der Einlassventile durch eine früheres Einlassventil-Schließen oder ein späteres Einlassventil-Schließen bewirkt werden.

Die Füllung des Zylinders (Füllgrad, Liefergrad) beschreibt das Verhältnis der nach Abschluss eines Ladungswechsels tatsächlich im Zylinder enthaltenen Frischladung zur theoretisch maximal möglichen Füllung.

Der Leistungsregelkreis der Brennkraftmaschine wird zunächst schnell den Ladedruck erhöhen um die Leistung wieder herzustellen. Der Emissionsregelkreis würde jedoch anfetten, da er bestrebt ist, die Leistung bei gleichem Ladedruck zu erbringen. Hier greift der hinterlegte funktionale Zusammenhang ein: Angepasst auf die geänderte Schließzeit wird ein neuer Soll-Ladedruck für die zu erbringende Leistung vorgegeben. Dadurch wird der Eingriff des Emissionsregelkreises auf das Treibstoff-Luft-Verhältnis derart beschränkt, dass die Anfettung auf das für die zu erbringende Leistung korrekte Maß begrenzt wird. Der in der ersten Reaktion des Leistungsregelkreises angehobene Ladedruck kann dann wieder reduziert werden.

Das bisher beschriebene Beispiel bezog sich auf einen kaskadierten Regler bei einer gemischaufgeladenenen Brennkraftmaschine.
Das kaskadierte Regelkonzept kann auch bei einer zylinderindividuellen Kraftstoffeinbringung eingesetzt werden.

Im Folgenden soll das parallele Regelverfahren am Beispiel einer zylinderindividuellen Kraftstoffeinspritzung beschrieben werden. Es kann jedoch auch bei gemischaufgeladenen Brennkraftmaschinen eingesetzt werden:
Sinkt der Füllgrad aufgrund des Eingriffs auf die Betätigungscharakteristik des wenigstens einen Einlassventiles und damit - bei konstanter Gasmenge - die Luftmenge, wird das Kraftstoff-Luft-Gemisch im Brennraum zu fett.
Durch Anpassung des funktionalen Zusammenhangs auf die geänderte Betätigungscharakteristik des wenigstens einen Einlassventiles wird der Ladedruck erhöht.

Dadurch stellt sich ein gegenüber dem vorherigen Betriebspunkt fetteres Gemisch ein, das trotz des geänderten Miller-Effektes konstante NOx-Emissionen ermöglicht.

Gemäß der Erfindung wird der funktionale Zusammenhang, der z.B. in Form einer Kurve vorliegt, wobei die Kurve für einen bestimmten NOx-Emissionswert den Zusammenhang zwischen Ist-Leistung und Ladedrucksollwert angibt, gegenüber dem Stand der Technik so abgeändert, dass der Einfluss des Miller-Verfahrens für jede Öffnungscharakteristik des variablen Ventiltriebs berücksichtigt wird und die Brennkraftmaschine die Leistung bei korrekten NOx-Emissionswerten erbringt. In anderen Worten wird eine andere Zielkurve im Leistung-Ladedruck-Kennfeld gewählt, also ein für die geänderte Öffnungscharakteristik der Einlassventile angepasster Betriebspunkt gewählt.

Die Erfindung wird nachfolgend durch Figuren näher erläutert. Dabei zeigt:
- Fig. 1: ein Diagramm von Ladedruck über Leistung für verschiedene Miller-Steuerzeiten und
- Fig. 2: eine schematische Darstellung einer Brennkraftmaschine.

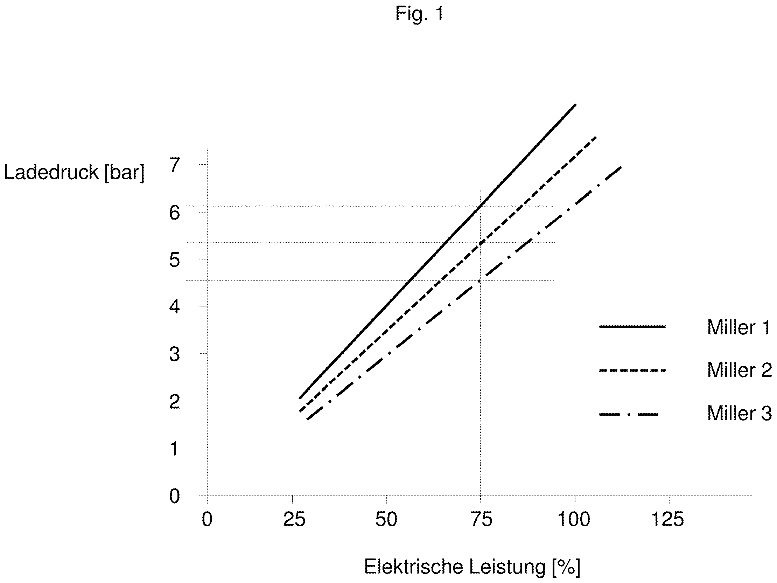

Figur 1 zeigt ein Diagramm des Ladedrucks einer Brennkraftmaschine über der von der Brennkraftmaschine erbrachten mechanischen bzw. elektrischen Leistung. Eingezeichnet ist der Zusammenhang für drei unterschiedliche Steuerzeiten (Kurven Miller 1, Miller 2 und Miller 3) bei vorgegebenen, also für alle drei Kurven gleichen NOx-Emissionen.

Dabei liegt das Einlassventil-Schließen bei "Miller 1" vom frühesten, bei "Miller 3" am spätesten und bei "Miller 2" dazwischen. Die Steuerzeit des mit "Miller 1" gekennzeichneten Verlaufes entspricht - in den Worten der vorangegangenen Beschreibung - einer "schärferen" Ventil-Schließzeit. Durch das gegenüber den zwei anderen Steuerzeiten frühere Einlassventil-Schließen bei "Miller 1" wird um konstante NOx-Emissionen zu erzielen zum Erbringen der gleichen mechanischen bzw. elektrischen Leistung (beispielsweise 75%) bei Miller 1 ein größerer Ladedruck benötigt als beispielsweise bei Miller 2 oder Miller 3.

Während des Betriebs einer mit einem variablen Ventiltrieb 3 ausgestatteten Brennkraftmaschine 1 werden die Steuerzeiten der Einlassventile 4 oftmalig geändert. Damit kann auf sich ändernde Lastanforderungen sowie auf sich ändernde Umgebungsbedingungen reagiert werden. Als Beispiel sei der Startvorgang genannt, während dessen die Schließzeiten der Einlassventile 4 üblicherweise gegenüber den Schließzeiten für den Betrieb bei Volllast weniger scharf gestellt werden. Eine andere sich ändernde Bedingung ist die Außentemperatur. Verschleiß und Ablagerungen an der Gaswechseleinheit erfordern ebenfalls Anpassungen der Steuerzeiten.

Geht nun die Regelung der Brennkraftmaschine von einem konstanten für eine Betätigungscharakteristik der Einlassventile 4 hinterlegten Zusammenhang zwischen Ladedruck und Leistung nach dem Stand der Technik aus, so treten Fehler bei dem aus dem Zusammenhang ermittelten Soll-Ladedruck auf, sobald sich die Betätigungscharakteristik gegenüber dem Ausgangswert verändert hat.

Durch die vorliegende Erfindung ist in der Regeleinrichtung C der Brennkraftmaschine 1 der Einfluss einer Verstellung der Betätigungscharakteristik des wenigstens einen Einlassventiles 4 berücksichtigt.

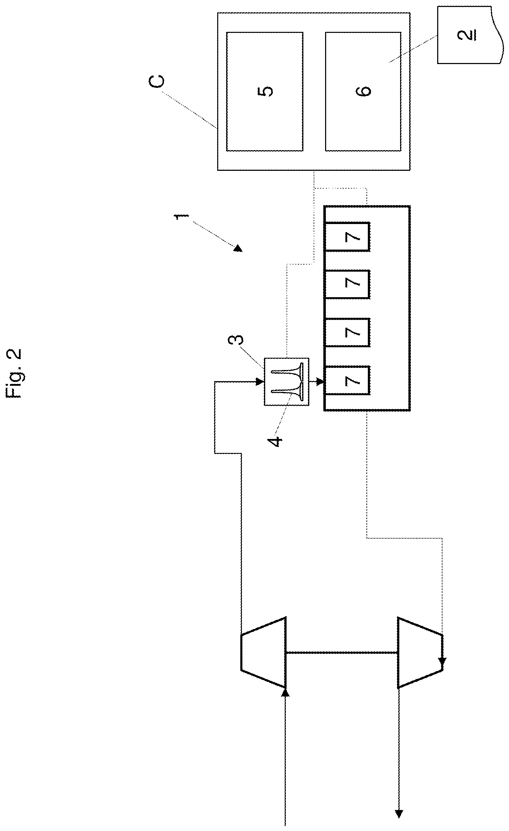

Figur 2 zeigt schematisch eine Brennkraftmaschine 1, die mit einem variablen Ventiltrieb 3 ausgestattet ist. Über den variablen Ventiltrieb 3 lässt sich zyklus- und gegebenenfalls zylinderindividuell die Öffnungscharakteristik des wenigstens einen Einlassventils 4 und dadurch die Menge (das Volumen) an in einen Brennraum 7 der Brennkraftmaschine 1 einströmender Ladeluft oder Treibgas-Luft-Gemisch variieren. Im vorliegenden Beispiel sind vier Brennräume 7 gezeigt. Es können wesentlich mehr oder auch weniger sein.

Die Regeleinrichtung C umfasst
- einen Leistungsregelkreis 5, der dazu ausgebildet ist, eine Ist-Leistung der Brennkraftmaschine 1 an eine Soll-Leistung der Brennkraftmaschine 1 anzugleichen und
- einen Emissionsregelkreis 6, der dazu ausgebildet ist, über einen funktionalen Zusammenhang 2 den Ladedruck als Ersatzgröße für die NOx-Emission durch den Ladedruck beeinflussende Aktuatoren so anzusteuern, dass für jede Soll-Leistung P^{d}_{g} oder Ist-Leistung P_{g} der Brennkraftmaschine 1 ein Ladedrucksollwert p^{d}ᵢₘ einstellbar ist.

Der funktionale Zusammenhang 2 kann beispielsweise in Form einer Kurvenschar, eines Kennfeldes, einer Tabelle oder in Form eines analytischen Zusammenhangs hinterlegt sein.

### Liste der verwendeten Bezugszeichen:

- 1: Brennkraftmaschine
- 2: funktionaler Zusammenhang
- 3: variabler Ventiltrieb
- 4: Einlassventil
- 5: Leistungsregelkreis (engl.: *power control loop*)
- 6: Emissionsregelkreis (engl.: *emission control loop*)
- 7: Brennraum
- C: Regeleinrichtung
- P_{g}: Ist-Leistung
- P^{d}_{g}: Soll-Leistung
- p^{d}ᵢₘ: Ladedrucksollwert
- λ: Verbrennungsluftverhältnis (Lambda)

## Patentansprüche

1. Brennkraftmaschine (1) mit einer Regeleinrichtung (C), wobei in der Brennkraftmaschine (1) ein Treibstoff-Luft-Gemisch mit einem durch die Regeleinrichtung (C) beeinflussbaren Verbrennungsluftverhältnis (λ) verbrannt wird, wobei die Regeleinrichtung (C) einen Emissionsregelkreis (6) aufweist, der dazu ausgebildet ist, über einen funktionalen Zusammenhang (2) den Ladedruck als Ersatzgröße für die NOx-Emission durch den Ladedruck beeinflussende Aktuatoren so anzusteuern, dass für jede Soll-Leistung (P^{d}_{g}) oder Ist-Leistung (P_{g}) der Brennkraftmaschine ein Ladedrucksollwert (p^{d}ᵢₘ) einstellbar ist, und wobei die Brennkraftmaschine (1) weiters einen variablen Ventiltrieb (3) aufweist, durch welchen eine Betätigungscharakteristik wenigstens eines Einlassventiles (4) veränderbar ist, wobei der funktionale Zusammenhang (2) den Einfluss einer Verstellung der Betätigungscharakteristik des wenigstens einen Einlassventiles (4) berücksichtigt und der funktionale Zusammenhang für einen bestimmten NOx-Emissionswert den Zusammenhang zwischen Ist-Leistung und Ladedrucksollwert angibt, **dadurch gekennzeichnet, dass** die Regeleinrichtung (C) dazu ausgebildet ist, über den funktionalen Zusammenhang (2) den Einfluss der Veränderung der Betätigungscharakteristik des Einlassventiles (4) zu berücksichtigen, sodass die Brennkraftmaschine (1) die Leistung bei korrektem NOx-Emissionswert erbringt.

2. Brennkraftmaschine (1) nach Anspruch 1, wobei bei einer Veränderung der Betätigungscharakteristik des wenigstens einen Einlassventiles (4) in eine Richtung, die einen geringeren Füllgrad der Brennkraftmaschine (1) bewirkt, der funktionale Zusammenhang (2) den Eingriff auf den Emissionsregelkreis (6) dermaßen beeinflusst, dass eine Anfettung des der Brennkraftmaschine (1) zugeführten Treibstoff-Luft-Gemisches auf das für die zu erbringende Leistung korrekte Maß korrigiert wird.

3. Brennkraftmaschine (1) nach Anspruch 1 oder 2, wobei bei einer Veränderung der Betätigungscharakteristik des wenigstens einen Einlassventiles (4) in eine Richtung, die einen geringeren Füllgrad der Brennkraftmaschine (1) bewirkt, die Berücksichtigung des funktionalen Zusammenhanges (2) so erfolgt, dass der Emissionsregelkreis (6) ein gegenüber dem vorherigen Betriebspunkt fetteres Treibstoff-Luft-Gemisch einstellt.

4. Brennkraftmaschine (1) nach wenigstens einem der vorangegangenen Ansprüche, wobei bei einer Veränderung der Betätigungscharakteristik des wenigstens einen Einlassventiles (4) in eine Richtung, die einen geringeren Füllgrad der Brennkraftmaschine (1) bewirkt, die Berücksichtigung des funktionalen Zusammenhanges (2) so erfolgt, dass ein Ladedruck der Brennkraftmaschine (1) erhöht wird.

## Claims

1. An internal combustion engine (1) with a closed loop control device (C), whereby a fuel-air mixture is burned in the internal combustion engine (1) with a combustion air ratio (A) controllable by the closed loop control device (C), whereby the closed loop control device (C) comprises an emission control loop (6), which is designed to control the charge-air pressure as a substitute variable for the NOx emission by the actuators influencing the charge-air pressure via a functional relationship (2), such that, for each target power (P^{d}_{g}) or actual power (P_{g}) of the internal combustion engine, a charge-air pressure target value (p^{d}ᵢₘ) can be set, and whereby the internal combustion engine (1) further comprises a variable valve train (3), by means of which an operating characteristic of at least one inlet valve (4) can be varied, wherein the functional relationship (2) takes into account the influence of an adjustment of the operating characteristic of the at least one inlet valve (4) and the functional relationship indicates for a specific NOx emission value the relationship between the actual power and the charge-air pressure target value, **characterized in that** the closed loop control device (C) is configured to take into account the influence of the adjustment of the operating characteristic of the at least one inlet valve (4) by use of functional relationship (2), so that the internal combustion engine (1) provides the power at the correct NOx emission value.

2. An internal combustion engine (1) according to claim 1, whereby, with a change in the operating characteristic of the at least one inlet valve (4) in a direction that causes a decreased degree of filling of the internal combustion engine (1), the functional relationship (2) influences the intervention on the emission control loop (6) such that an enrichment of the fuel-air mixture supplied to the internal combustion engine (1) is corrected to the level that is correct for the power to be provided.

3. An internal combustion engine (1) according to claim 1 or 2, whereby, in a change of the operating characteristic of the at least one inlet valve (4) in a direction which causes a decreased degree of filling of the internal combustion engine (1), the functional relationship (2) is considered such that the emission control loop (6) adjusts a fuel-air mixture that is richer compared to the previous operating point.

4. An internal combustion engine (1) according to at least one of the preceding claims, whereby, in a change of the operating characteristic of the at least one inlet valve (4) in a direction which causes a decreased degree of filling of the internal combustion engine (1), the functional relationship (2) is considered such that a charge-air pressure of the internal combustion engine (1) is increased.

## Revendications

1. Moteur à combustion interne (1) avec un dispositif de régulation (C), dans lequel, dans le moteur à combustion interne (1), a lieu la combustion d'un mélange carburant-air avec un rapport d'air de combustion (λ) pouvant être contrôlé par le dispositif de régulation (C), dans lequel le dispositif de régulation (C) comprend un circuit de régulation d'émission (6) qui est conçu pour contrôler, à l'aide d'une relation fonctionnelle (2), la pression de charge en tant que grandeur de remplacement pour l'émission de NOx à l'aide des actionneurs contrôlant la pression de charge, de façon à ce que, pour chaque puissance de consigne (P^{d}_{g}) ou puissance effective (P_{g}) du moteur à combustion interne, une valeur de consigne de la pression de charge (p^{d}_{¡m}) puisse être réglée, et dans lequel le moteur à combustion interne (1) comprend en outre une commande de soupapes variable (3) qui permet de modifier une caractéristique d'actionnement d'au moins une soupape d'admission (4), dans lequel la relation fonctionnelle (2) prend en compte l'influence d'un réglage de la caractéristique d'actionnement de l'au moins une soupape d'admission (4) et la relation fonctionnelle indique, pour une valeur d'émission de NOx déterminée, la relation entre la puissance effective et la valeur de consigne de la pression de charge, **caractérisé en ce que** le dispositif de régulation (C) est conçu pour prendre en compte à l'aide de la relation fonctionnelle (2), l'influence de la modification de la caractéristique d'actionnement de la soupape d'admission (4), de façon à ce que le moteur à combustion interne (1) délivre la puissance avec une valeur d'émission de NOx correcte.

2. Moteur à combustion interne (1) selon la revendication 1, dans lequel, lors d'une modification de la caractéristique d'actionnement de l'au moins une soupape d'admission (4) dans une direction, qui provoque un degré de remplissage plus faible du moteur à combustion interne (1), la relation fonctionnelle (2) influence l'intervention sur le circuit de régulation d'émission (6) de façon à ce qu'un enrichissement du mélange carburant-air introduit dans le moteur à combustion interne (1) soit corrigé de manière appropriée pour la puissance à délivrer.

3. Moteur à combustion interne (1) selon la revendication 1 ou 2, dans lequel, lors d'une modification de la caractéristique d'actionnement de l'au moins une soupape d'admission (4) dans une direction, qui provoque un degré de remplissage plus faible du moteur à combustion interne (1), la prise en compte de la relation fonctionnelle (2) a lieu de façon à ce que le circuit de régulation d'émission (6) ajuste un mélange carburant-air plus riche par rapport au point de fonctionnement précédent.

4. Moteur à combustion interne (1) selon au moins l'une des revendications précédentes, dans lequel, lors d'une modification de la caractéristique d'actionnement de l'au moins une soupape d'admission (4) dans une direction, qui provoque un degré de remplissage plus faible du moteur à combustion interne (1), la prise en compte de la relation fonctionnelle (2) a lieu de façon à ce qu'une pression de charge du moteur à combustion interne (1) soit augmentée.
